# EUROPEAN PATENT APPLICATION

(11) **EP 2 894 744 A1**
(43) Date of publication of application: **15.07.2015**
(21) Application number: 14151112.1
(22) Date of filing: 14.01.2014
(51) Int. Cl.: H02G 5/06, H02G 5/10, H02K 7/18

(54) **Method of optimizing cooling efficiency in tubular bus structures**

(71) Applicant: Siemens Aktiengesellschaft, 80333 München (DE)
(72) Inventor: Banchhor, Vikas Kumar, 122001 Gurgaon (IN); Samanta, Bidhan, 122002 Gurgaon (IN)

(57) **Abstract**

The present invention and the embodiments thereof relate to optimizing a cooling efficiency of tubular bus structures used in turbo-generators, wherein the tubular bus structure is electrically coupled to a stator of the turbo-generator. The tubular bus structure comprises an electrically conducting tube (2) with an outer side (4) and an inner side (6), and having at least one fin (8) along the inner side (6). The at least one fin (8) along the inner side of the tubular bus structure exposes additional area of the inner side (6) thereby optimizing the cooling efficiency of the tubular bus structure.

## Description

### Field of Invention

The present invention relates to tubular bus structures used in turbo-generators.

### Description of Prior Art

In turbo-generators, tubular bus structures, also known as, phase rings or parallel rings, are used at a collector end for facilitating in collection and distribution of the power generated. The tubular bus structures have parallel path connections with stator windings in order to transfer power out of the turbo-generators.

The tubular bus structures conduct high levels of current generated by the turbo-generator. As a result, the tubular bus structures heat up to a high temperature. Currently, the tubular bus structures have a tubular structure and circulate a coolant within the tubular structure. The coolant, such as hydrogen gas, cools the tubular bus structures by dissipating the heat produced due to the conduction of electricity. In cases where turbo-generator is upgraded to a produce higher power, the tubular bus structures also need to be redesigned to operate at higher temperatures. The redesigning of the tubular bus structure is very costly and time consuming. Therefore, there is a need for optimizing the cooling efficiency of tubular bus structures.

The invention solves the underlying object of optimizing the cooling efficiency of the tubular bus structure of the turbo-generator by increasing the surface area available for thermal exchange on the inner side of the tubular bus structure. The tubular bus structure is electrically coupled to a stator of the turbo-generator, wherein the tubular structure comprises an electrically conducting tube having an outer side and an inner side, wherein the inner side comprises at least one fin. In a preferred embodiment, the electrically conducting tube of the tubular bus structure is a metallic tube. The electrically conducting tube may have at least one of, but not limited to, a circular, a rectangular, a square and a triangular cross section. The tubular structure is hollow and circulates a coolant within the tube. Further, the fin on the inner side of the tubular bus structure increases the side area of the inner side of the tube which is exposed to the coolant, thereby enabling the coolant to efficiently exchange the heat produced in the electrically conducting tube. As a result, the tubular bus structure can withstand heat and electricity of a higher range. As a result, there is no need to redesign the tubular bus structure whenever a capacity of the turbo-generator is upgraded, thus saving resources and time.

In an embodiment, the tubular bus structure is circumferential and is coupled to the stator frame. The tubular bus structure comprises a hollow electrically conducting tube having an inner side and an outer side. The outer side of the tubular bus structure is covered with a layer of insulation material. The inner side of the tubular bus structure comprises one or more fins protruding in a radial manner. A coolant, for example, hydrogen gas, is circulated within the tubular bus structure. The one or more fins expose additional area of the inner side to the coolant for optimized heat exchange. In another embodiment, the fins can be designed based on one or more factors such as, amount of electricity conducted, scalability of the turbo-generator, amount of heat generated and so on.

In another embodiment, the tubular bus structure is fabricated from a single electrically conducting block. The one or more fins may be formed using the single electrically conducting block for optimizing cooling efficiency of the tubular bus structure. In the preferred embodiment, the one or more fins have a rectangular shape and protrude towards a central axis of the inner side of the tubular bus structure. The one or more fins may have differently shaped cross sections such as, but not limited to, rectangular, triangular, angled, dented, forked, lobed, semi circular or any other suitable shape for optimizing heat transfer to the coolant.

In yet another embodiment, the one or more fins may be detachable to the inner side of the tubular bus structure. In some cases, the fin may be composed of a same material as that of the inner side of the tubular bus structure. In some embodiments, the one or more fins may be composed of a different material as that of the inner side of the tubular bus structure. The material of the one or more fins may be determined based on the level of cooling efficiency required and scalability of the turbo-generator.

In still yet another embodiment, the inner side of the tubular bus structure has one or more grooves for attaching the one or more fins. In accordance with the embodiment, the one or more fins are detachable to the inner side of the tubular bus structure. The one or more grooves allow for the replacement of the one or more fins in case the turbo-generator is upgraded, in order to withstand the higher amounts of heat and electricity.

A specific embodiment of the invention is as shown in figures mentioned below:
- FIG. 1: illustrates a front view of a cross section of a tubular bus structure in accordance, with a state of the art;
- FIG. 2: illustrates a perspective view of a tubular bus structure, in accordance with the state of the art;
- FIG. 3: illustrates a front view of a cross section of the tubular bus structure having one or more fins, in accordance with an embodiment of the invention;
- FIG. 4: illustrates a perspective view of a tubular bus structure having one or more fins, in accordance with an embodiment of the invention;
- FIG. 5: illustrates a cross sectional views of the inner side of the tubular bus structure, in accordance with an embodiment of the invention; and
- FIG. 6: illustrates a cross sectional view of a tubular bus structure with detachable fins, in accordance with an embodiment of the invention.

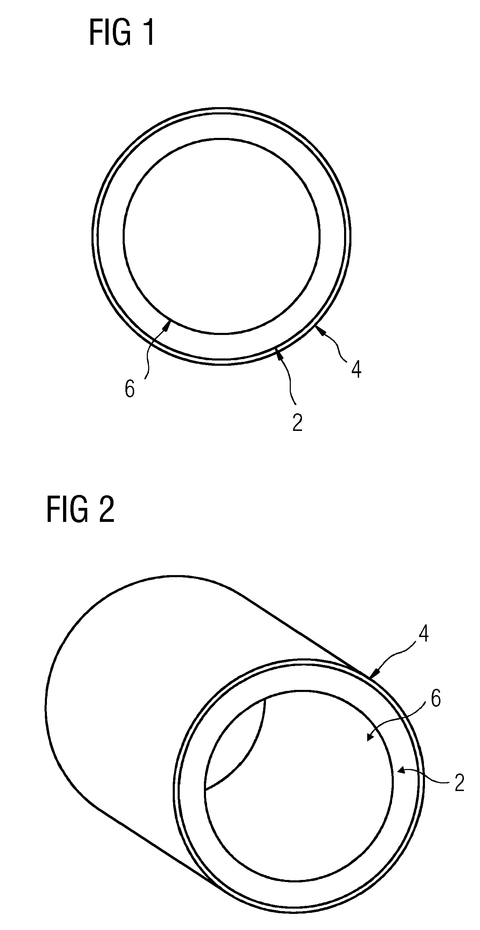

In a turbo-generator, tubular bus structures are used for collection and distribution of the electricity generated by the turbo-generator. Referring now to FIG. 1, illustrates a front view of a cross section of a tubular bus structure, in accordance with a state of the art. The tubular bus structure comprises an outer side 4 and an inner side 6. The tubular bus structure is an electrically conducting tube 2, composed of a material which conducts heat and electricity such as, for example, a metal such as copper. Further, the outer side 4 is insulated with an insulating material such as, but not limited to, an insulation tape and a ceramic coating. A coolant, such as, hydrogen, is passed along the inner side 6 of the tubular bus structure.

FIG. 2 illustrates a perspective view of a tubular bus structure in accordance with the state of the art. In the tubular bus structure shown in FIG. 2, the cooling efficiency is reduced due to the exposure of a limited amount of area on the inner side 6 to the coolant for exchanging heat. The inner side 6 is plain and does not have any provision to expose additional area to the coolant in order to dissipate the heat generated during the conduction of electricity. As a result, the tubular bus structure can conduct electricity up to a specified limit. In a case, wherein a capacity of the turbo-generator is increased, the tubular bus structure needs to be redesigned and replaced to effectively conduct the additional electricity and heat. The redesigning of the tubular bus structure requires significant cost and efforts.

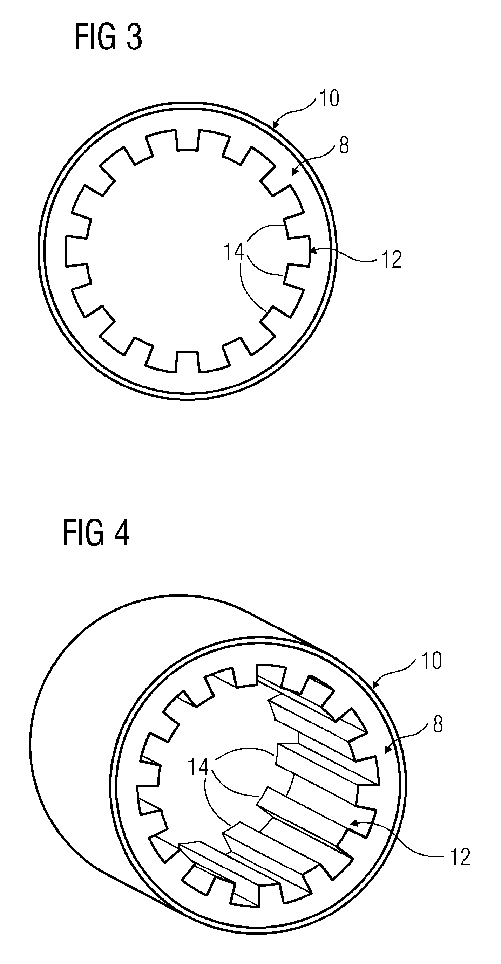

FIG. 3 illustrates a front view of a cross section of the tubular bus structure having one or more fins, in accordance with a preferred embodiment of the invention. The tubular bus structure shown in FIG. 3 has an electrically conducting tube 8, an outer side 10 and an inner side 12. In an embodiment, one or more fins 14 extend along the inner side 12 of the tubular bus structure. FIG. 4 illustrates a perspective view of a tubular bus structure having one or more fins, in accordance with an embodiment of the invention. In accordance with the embodiment, the one or more fins 14 extend longitudinally along the inner side 12, as shown in FIG. 4. In accordance with the preferred embodiment, the one or more fins 14 protrude towards the central axis of the inner side 12 of the tubular bus structure.

In an embodiment, the tubular bus structure and the one or more fins 14 on the inner side 12 are fabricated using a single metal, such as copper. In such a case, the composition of the tubular bus structure and the one or more fins 14 are identical.

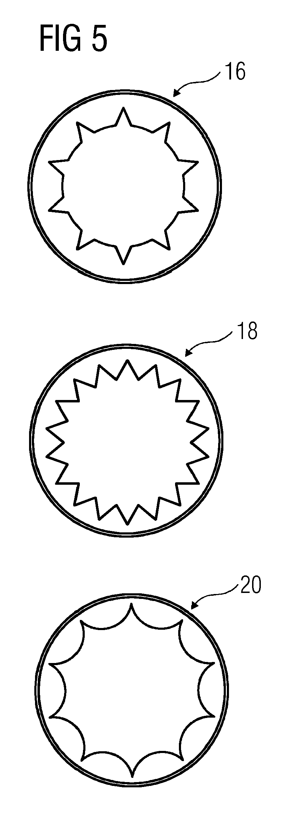

In some embodiments, the one or more fins 14 are fabricated in one or more shapes such as, but not limited to, rectangular, triangular, angled, dented, forked, lobed, semi circular or any other suitable shape for optimizing heat transfer to the coolant. FIG. 5 illustrates a cross sectional view of the inner side of the tubular bus structure, wherein the one or more fins have different shapes, in accordance with an embodiment of the invention. The shape of the one or more fins is determined based on the amount of heat to be dissipated. Though FIG. 5 illustrates some of the variations, 16, 18 and 20, in the structure of the one or more fins 14, a person skilled in the art can understand that the structure can be any other shape which optimizes the cooling efficiency of the tubular bus structure.

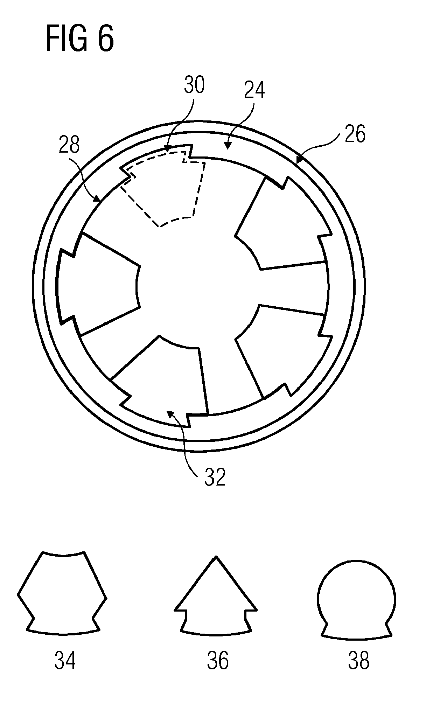

In an embodiment of the invention, one or more fins are detachable to the inner side of the tubular bus structure. FIG. 6 illustrates a cross sectional view of a tubular bus structure with detachable fins. In accordance with the embodiment, the tubular bus structure includes an electrically conducting tube 24. The electrically conducting tube 24 includes an outer side 26 and an inner side 28. The inner side 28 includes a groove 30 to accommodate the one or more fins 32 that are detachable. The one or more fins 32 have a base which is fabricated to fit into the groove 30, as shown in FIG. 6.

As shown in FIG. 6, the one or more fins 32 are fabricated in different shapes, such as, 34, 36 and 38 in FIG. 6. As shown in FIG. 6, the one or more fins 32 can be shaped as a rectangle, semi circle, triangle and the like. As the one or more fins are detachable, the one or more fins can be replaced with a suitable set of fins when required. For example, the one or more fins 32 can be replaced when the capacity of the turbo-generator is upgraded. The one or more fins 32 can be replaced for optimizing the cooling efficiency of the tubular bus structure. The structure and the size of the one or more fins 32 are determined based on the level of cooling efficiency required.

In accordance with the embodiment, the one or more fins 32 may be composed of a material which is different to that that of the tubular bus structure. The material of the one or more fins 32 may be chosen to optimize the cooling efficiency of the tubular bus structure. In an exemplary embodiment, the material of the tubular bus structure is copper. The material of the one or more fins 32 that are detachable may be composed of an alloy with better heat conduction properties to achieve optimized cooling efficiency.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A turbo-generator comprising a tubular bus structure which is electrically coupled to a stator of the turbo-generator, the tubular structure having an electrically conducting tube (2) with an outer side (4) and an inner side (6), and having at least one fin (8) along the inner side (6).

2. The turbo-generator of claim 1,
wherein the outer side of the electrically conducting tube is covered with a layer of insulating material.

3. The turbo-generator of claims 1-2,
wherein the at least one fin and the tubular bus module are fabricated from a single electrically conducting block.

4. The turbo-generator of claims 1-3,
wherein the at least one fin is detachable to the inner side of the tubular bus structure.

5. The turbo-generator of claims 1-4,
wherein the inner side comprises a slot for inserting the at least one fin.

6. The turbo-generator of claims 1-5, w
herein the composition of the at least one fin of the tubular bus structure is different from that of the inner side.

7. The turbo-generator of claims 1-5,
wherein the at least one fin protrudes radially towards the central axis of the inner side of the tubular bus structure.

8. The turbo-generator according to claim 1,
wherein the tubular bus structure is configured to circulate a coolant along the inner side.

9. The turbo-generator of claim 1,
wherein the tubular bus module is composed of an electrically conducting material.
